# FASCICULE DE BREVET EUROPEEN

(11) **EP 2 408 707 B1**
(45) Date de publication et mention de la délivrance du brevet: **01.05.2013**
(21) Numéro de dépôt: 10709871.7
(22) Date de dépôt: 26.02.2010
(51) Int. Cl.: B66C 17/06, F01D 25/28, G01M 15/02

(54) **ATELIER DE PREPARATION DE MOTEURS D'AVION POUR LEUR EXPEDITION**
ARBEITSPLATZ ZUR HERSTELLUNG LIEFERFERTIGER FLUGZEUGTRIEBWERKE
WORKSHOP FOR PREPARING AIRCRAFT ENGINES FOR SHIPPING

(30) Priorité: 17.03.2009 FR 0901236
(43) Date de publication de la demande: 25.01.2012
(73) Titulaire: Snecma Société Anonyme, 75015 Paris (FR)
(72) Inventeur: CARCY, Bernard, François, F-77550 Moissy Cramayel (FR); CHENEAU, Christophe, André, F-77550 Moissy Cramayel (FR); GUERIN, Jacques, Georges, Philippe, F-77550 Moissy Cramayel (FR); MUZELLEC, Henri, F-77550 Moissy Cramayel (FR)
(74) Mandataire: Ramey, Daniel
(86) Numéro de dépôt international: PCT/FR2010/000177
(87) Numéro de publication internationale: WO 2010/106237

(56) Documents cités:
- EP-A2- 2 006 655
- FR-A1- 2 265 496
- US-A- 4 395 180
- US-A- 4 821 217
- US-A- 5 653 351

## Description

L'invention concerne un atelier de préparation de moteurs d'avion pour leur expédition, en général en vue de leur montage sur des avions.

De façon réglementaire, chaque moteur d'avion sortant d'une chaîne de montage est soumis à des essais de fonctionnement dans un local aménagé à cet effet. Le moteur doit être équipé en atelier de différents moyens d'essai et de mesure qui vont être utilisés au cours des essais et qui sont démontés du moteur après les essais et remplacés par des équipements définitifs.

Le montage des moyens d'essai et de mesure est réalisé par plusieurs personnes sur le moteur posé sur un chariot de transport qui est utilisé pour emmener le moteur jusqu'au local d'essai et le ramener ensuite à l'atelier.

Le démontage des moyens d'essai et de mesure, le contrôle du moteur après essai, le montage des équipements définitifs et la préparation finale du moteur pour son expédition sont également réalisés à poste fixe lorsque le moteur est sur un chariot de transport.

Cette organisation traditionnelle présente un certain nombre d'inconvénients :
- la pose du moteur sur un chariot de transport gêne le travail des opérateurs en les empêchant d'accéder facilement à certaines parties du moteur et crée des insécurités ;
- une mise en parallèle des tâches à effectuer sur le moteur est quasi impossible, ce qui allonge le temps de préparation des moteurs et augmente le coût de cette préparation ;
- aucune visualisation de l'avancement des tâches sur le moteur n'est possible ;
- les opérateurs ne peuvent se référer qu'à des manuels imprimés de montage et à des étiquettes imprimées accrochées aux moteurs ;
- le contrôle des tâches effectuées par les opérateurs est très difficile ou impossible. Le US 4395180 divulgue un atelier de préparation de moteurs d'avion pour leur expédition qui comprend des postes de travail, ces postes étant agencés de façon fixe dans l'atelier le long d'un trajet prédéterminé des moteurs; et qui comprend des moyens de convoyage et de manutention des moteurs, portés par un bâti qui s'étend au-dessus des postes précités et comprenant des moyens de pose et de reprise des moteurs sur des supports fixes installés dans les différents postes et conçus pour permettre un accès direct à toutes les parties du moteur, et des moyens de déplacement des moteurs d'un poste à l'autre; et qui comprend des moyens de commande des moyens de convoyage.

L'invention a notamment pour but d'éviter ces inconvénients et d'améliorer la sécurité, la rapidité, la fiabilité et le contrôle de la préparation des moteurs d'avion en vue de leur expédition.

Elle propose à cet effet un atelier de préparation de moteurs d'avion pour leur expédition, caractérisé en ce qu'il comprend :
- un poste de montage de moyens de mesure et d'essai sur chaque moteur, un poste de démontage des moyens de mesure et d'essai, un poste de contrôle des moteurs par endoscopie, un poste de finition pour le montage d'équipements définitifs sur chaque moteur et un poste d'expédition pour le montage de chaque moteur sur un bâti d'expédition et la pose d'enveloppes de protection sur le moteur, ces postes étant agencés de façon fixe dans l'atelier le long d'un trajet prédéterminé des moteurs ;
- des moyens de convoyage et de manutention des moteurs, portés par un bâti qui s'étend au-dessus des postes précités et comprenant des moyens de pose et de reprise des moteurs sur des supports fixes installés dans les différents postes et conçus pour permettre un accès direct à toutes les parties du moteur, et des moyens de déplacement des moteurs d'un poste à l'autre ;
- et des moyens de commande des moyens de convoyage pour que le départ d'un moteur d'un quelconque des postes précités soit suivi sensiblement sans délai de l'arrivée d'un autre moteur à ce poste, les temps de séjour des moteurs dans les différents postes étant identiques.

Dans l'atelier selon l'invention, chaque personne travaillant sur un moteur a un accès facile aux différentes parties de ce moteur, notamment en raison du fait que les moyens de convoyage et de manutention des moteurs sont sur un bâti fixe qui s'étend au-dessus des différents postes de l'atelier, ce qui laisse une grande surface libre au sol et permet aux opérateurs de circuler sans problèmes le long du moteur et sous le moteur, sans être gênés par un chariot de transport de moteur.

Ainsi, les différentes tâches à effectuer sur un moteur peuvent être exécutées de façon séquentielle et toujours dans le même ordre et aux mêmes endroits, ce qui facilite le travail des opérateurs ainsi que le suivi et le contrôle de ces tâches.

Selon une autre caractéristique de l'invention, les moyens de convoyage comprennent des palans guidés en translation sur des rails horizontaux du bâti précité et reliés par des câbles à des palonniers fixés sur les moteurs pour la dépose et la reprise des moteurs.

Avantageusement, les câbles des palans sont reliés aux palonniers par des crochets reçus dans des guides en entonnoir solidaires des palonniers et retenus dans ces guides par des moyens de verrouillage actionnés par des vérins.

Ainsi, les déplacements des moteurs d'un poste à l'autre, leur pose sur des moyens de support installés dans un poste particulier et leur reprise peuvent être effectués de façon automatisée.

Les supports de moteur installés dans les postes de montage et de démontage des moyens de mesure et d'essai comprennent des montants verticaux fixés au sol de part et d'autre d'un emplacement prévu pour le moteur, chaque montant portant un bras horizontal de fixation sur un carter du moteur et des moyens de réglage de la position en hauteur de ce bras, fonctionnant en synchronisme avec les moyens de réglage des bras des autres montants de sorte que tous les bras horizontaux de fixation soient toujours dans un même plan horizontal.

Dans un mode de réalisation préféré de l'invention, les postes de montage et de démontage des moyens d'essai et de mesure sont chacun équipés de deux montants avant, placés face à face au niveau du carter intermédiaire d'un moteur, et d'un montant arrière placé sur un côté au niveau du carter d'échappement du moteur.

Au poste de montage des moyens d'essai et de mesure, le bâti comprend des rails horizontaux de déplacement d'un palan pour la prise d'un moteur sur un chariot de transport stationné à côté du poste de montage, le déplacement du moteur pour l'amener au-dessus du poste de montage et le descendre au niveau des bras horizontaux des montants précités, puis pour le levage du moteur au-dessus du poste de montage, et le déplacement et la pose du moteur sur un chariot de transport à un local d'essai.

De façon similaire, au poste de démontage, le bâti comprend des rails horizontaux de déplacement d'un palan au-dessus du poste de démontage pour la prise d'un moteur sur un chariot de transport stationné à côté du poste de démontage, le déplacement du moteur pour l'amener au-dessus du poste de démontage et la descente du moteur au niveau des bras horizontaux des montants précités, puis pour le levage du moteur au-dessus du poste de démontage et son déplacement jusqu'au poste de contrôle.

Dans les postes de contrôle et de finition, les supports de moteur comprennent deux colonnes verticales situées de part et d'autre d'un emplacement prévu pour le moteur dans chacun de ces postes, ces colonnes étant suspendues au bâti précité et leurs extrémités inférieures se trouvant au-dessus du sol à une hauteur supérieure au diamètre du moteur et comportant des moyens de support et d'accrochage d'un palonnier fixé à un moteur.

Ces moyens de support et d'accrochage d'un palonnier sont déplaçables en hauteur de façon synchrone sur les colonnes.

De plus, des moyens d'éclairage supérieur et inférieur sont installés à chaque poste, les moyens d'éclairage inférieur étant encastrés dans le sol et recouverts par des plaques de matériau transparent situées dans le plan du sol.

Cet éclairage ne gêne pas les déplacements des opérateurs et leur permet de voir les parties inférieures des moteurs dans de bonnes conditions de lumière.

Selon d'autres caractéristiques de l'invention, chaque poste comprend au moins un terminal informatique pour l'affichage de tâches séquentielles qui doivent être effectuées dans un ordre donné sur le moteur à ce poste par un opérateur, et une série d'outils que l'opérateur doit utiliser pour effectuer ces tâches.

De préférence, chaque poste comprend au moins deux terminaux informatiques et deux séries d'outils, installés de part et d'autre de l'emplacement du moteur au poste précité et destinés à être utilisés simultanément par deux opérateurs effectuant des tâches séquentielles identiques ou différentes sur le moteur.

De plus, chaque poste comprend un autre terminal informatique d'affichage d'informations relatives au moteur se trouvant dans ce poste et à la destination de ce moteur.

Par ailleurs, l'atelier comprend également un poste de retouche qui est installé à côté du poste de contrôle sous le bâti précité et qui est destiné à recevoir des moteurs dont les essais n'ont pas été conformes à des normes prédéterminées.

Le poste de retouche n'est pas en série avec le poste de contrôle, mais en parallèle avec ce poste de contrôle de façon à permettre des interventions particulières sur les moteurs dont les essais n'ont pas été satisfaisants.

L'invention sera mieux comprise et d'autres caractéristiques, détails et avantages de celle-ci apparaîtront plus clairement à la lecture de la description qui suit, faite en référence aux dessins annexés dans lesquels :
- la figure 1 représente l'organisation générale d'un atelier selon l'invention ;
- la figure 2 est une vue schématique en perspective d'un atelier selon l'invention ;
- la figure 3 est une vue schématique du poste de montage de moyens d'essai et de mesure sur un moteur ;
- la figure 4 représente schématiquement un des postes de contrôle et de finition ;
- la figure 5 illustre schématiquement le départ d'un moteur du poste de la figure 4 ;
- la figure 6 représente schématiquement l'organisation d'un des postes de montage et de démontage des moyens d'essai et de mesure ;
- les figures 7 et 8 représentent schématiquement deux opérateurs travaillant sur un moteur à l'un des postes de l'atelier, en vue de dessus et en vue de côté respectivement ;
- la figure 9 représente schématiquement un terminal informatique d'affichage des tâches à effectuer sur un moteur à l'un des postes de l'atelier ;
- la figure 10 représente schématiquement un autre terminal informatique d'affichage d'informations relatives à un moteur se trouvant dans un poste de l'atelier.

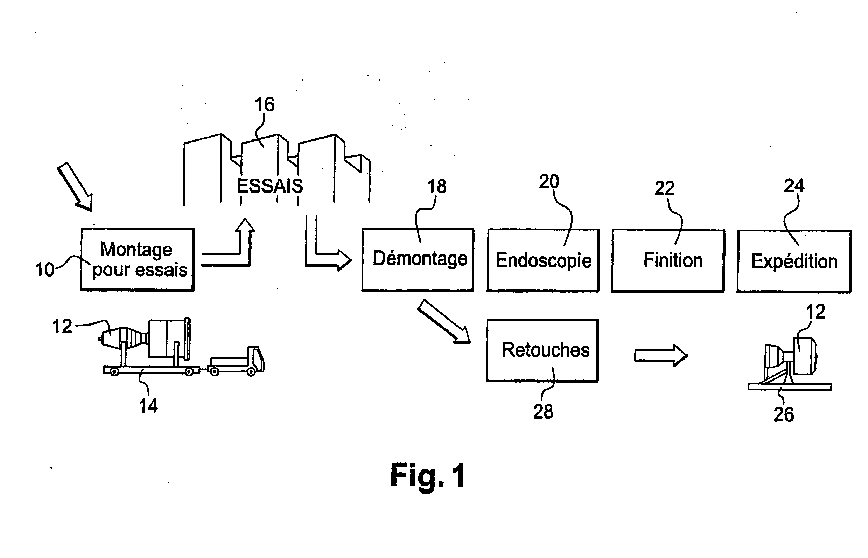

On se réfère d'abord à la figure 1 qui représente schématiquement l'organisation générale d'un atelier selon l'invention et un organigramme général des tâches exécutées dans cet atelier.

Le premier poste 10 de l'atelier reçoit les moteurs un par un en sortie d'une chaîne de montage pour équiper chaque moteur de moyens particuliers d'essai et de mesure qui seront utilisés lors des essais que le moteur doit subir avant d'être expédié chez un client, par exemple chez un constructeur d'avion.

De façon générale, les moyens montés sur le moteur pour ces essais comprennent un équipement de démarrage, un ensemble d'éjection, une virole arrière de capot, un cône avant, des équipements de lubrification et de circuit carburant, une buse d'entrée d'air ainsi que des moyens de pesée du moteur.

Le moteur 12 ainsi équipé est placé sur un chariot de transport 14 et emmené jusqu'à un local d'essai 16 qui se trouve dans un bâtiment isolé, dans lequel le moteur est accroché à une structure fixe résistante et est soumis à des essais de démarrage et de fonctionnement à différents régimes.

A l'issue de ces essais, le moteur 12 est remis sur le chariot 14 et est ramené dans l'atelier jusqu'à un poste 18 de démontage des moyens de mesure et d'essai.

Le moteur est ensuite transféré à un poste 20 de contrôle par endoscopie, permettant notamment de vérifier l'état des aubes des étages basse pression et haute pression du moteur.

Le moteur est ensuite transféré à un poste 22 de finition, dans lequel il est préparé pour l'expédition à un client, les opérations effectuées dans ce poste comprenant notamment une vidange du réservoir d'huile, du démarreur et du boîtier d'accessoires, le montage d'un connecteur d'identification, et le montage d'une virole arrière de capot, d'un cône avant et d'une protection du cône avant, ainsi qu'une protection anti-corrosion des parties sensibles du moteur.

Le moteur est ensuite transféré au poste 24 d'expédition, dans lequel il est placé sur un bâti d'expédition 26, et soumis à des contrôles visuels de finition, après quoi on place des housses de protection sur différentes parties du moteur et on recouvre le moteur d'une bâche de protection.

Comme on l'a représenté schématiquement en figure 1, les différents postes de l'atelier sont alignés le long d'un axe commun de telle sorte qu'un moteur qui sort d'un poste pénètre immédiatement dans le poste suivant. Le temps de séjour d'un moteur est le même dans les différents postes (il est de quatre heures dans un exemple de réalisation concernant la préparation de turboréacteurs à double flux).

L'atelier comprend encore un poste 26 de retouche, dans lequel on transfère depuis le poste 18 de démontage les moteurs dont les essais n'ont pas été conformes à des normes préétablies et qui doivent faire l'objet d'interventions particulières. Ce poste 26 de retouche est en parallèle avec le poste 20 de contrôle par endoscopie et se trouve donc en dehors du trajet normal des moteurs dans l'atelier de préparation.

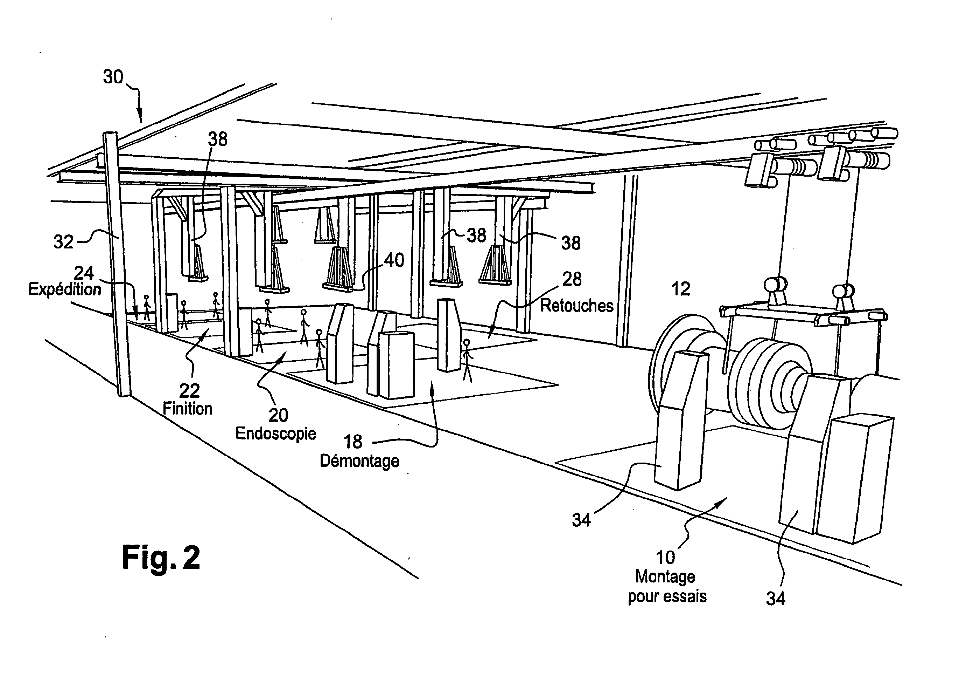

On se réfère maintenant aux figures 2 et suivantes qui représentent une réalisation pratique d'un atelier selon l'invention.

On retrouve en figure 2 la disposition particulière des postes 10, 18, 20, 22, 24 et 28 représentés en figure 1 et l'on voit que l'ensemble de ces postes est surmonté d'un bâti horizontal 30 qui se trouve à plusieurs mètres au-dessus du sol et qui est supporté par des piliers verticaux 32 fixés au sol. Ce bâti 30 porte tous les moyens de convoyage et de manutention des moteurs dans l'atelier, ainsi que les moyens de support des moteurs dans certains postes, ce qui libère beaucoup de place au sol et permet une circulation aisée des opérateurs dans l'atelier et dans les différents postes.

Dans les postes 10 de montage et 18 de démontage, les moyens de support des moteurs comprennent trois montants verticaux 34 fixés au sol de part et d'autre de l'emplacement d'un moteur dans le poste correspondant, deux de ces montants 34 étant face à face au niveau du carter intermédiaire du moteur et le troisième montant étant d'un côté du moteur au niveau du carter d'échappement de ce moteur.

Chaque montant vertical comporte un bras horizontal 36 de fixation sur le moteur et des moyens de réglage de la position en hauteur de ce bras sur le montant 34, les moyens de réglage de position des bras sur les montants étant synchronisés pour que tous les bras se trouvent constamment dans un même plan horizontal.

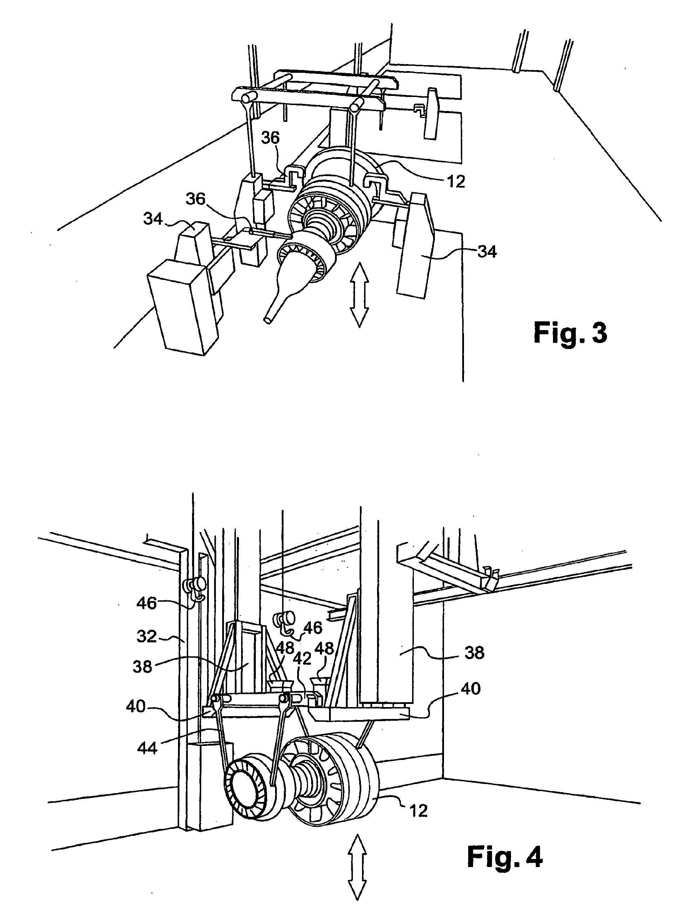

Dans les autres postes, les moyens de support des moteurs sont des colonnes verticales 38 suspendues au bâti supérieur 30 et dont les extrémités inférieures se trouvent à une certaine hauteur au-dessus du sol, cette hauteur étant supérieure au diamètre extérieur d'un moteur, comme on peut le voir notamment en figure 4.

Chaque poste 20, 22 ou 28 comprend deux de ces colonnes, placées face à face et de part et d'autre de l'emplacement d'un moteur dans le poste correspondant, ces colonnes portant des moyens 40 de support et d'accrochage d'un palonnier horizontal 42 formé essentiellement d'un cadre auquel sont accrochés des bras 44 qui s'étendent vers le bras et qui sont fixés à leurs extrémités inférieures sur le carter intermédiaire et sur le carter d'échappement du moteur, de chaque côté du moteur.

Les moyens 40 de support et d'accrochage des palonniers 42 sur les colonnes verticales 38 son réglables en hauteur, de façon synchronisée sur les deux colonnes 38 se trouvant face à face, de façon à ce que le palonnier 42 reste toujours dans un plan horizontal.

Les palonniers 42 fixés sur les moteurs sont eux-mêmes déplaçables d'un poste à l'autre au moyen de palans qui sont guidés sur des rails horizontaux du bâti supérieur 30 et qui sont reliés aux palonniers 42 par des câbles munis de crochets 46 à leur extrémité inférieure (voir figure 4 par exemple), ces crochets 46 étant destinés à être reçus dans des guides 48 en forme d'entonnoir fixés sur le palonnier 42 et à être retenus dans ces guides par des moyens de verrouillage tels que des broches transversales déplacées par des vérins.

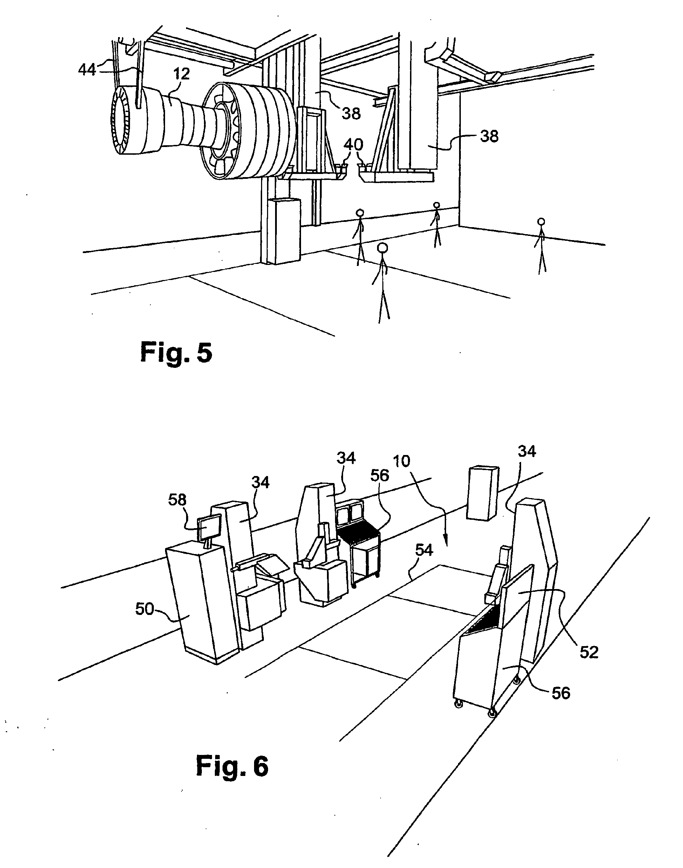

On comprend qu'un palan permet de lever un palonnier 42 auquel est suspendu un moteur pour dégager ce palonnier des moyens de support et d'accrochage 40 des colonnes 38 d'un poste de l'atelier, d'emmener le moteur au poste suivant (voir figure 5) par déplacement du palan sur les rails horizontaux du bâti supérieur 30, et de descendre ensuite le palonnier 42 jusqu'aux moyens 40 de support et d'accrochage des colonnes verticales 38 du poste suivant.

Les palans sont utilisés également pour poser les moteurs sur les moyens de support 34 des postes 10 et 18, pour prendre un moteur au poste 10 et le déposer sur un chariot 14 de transport au local d'essai, et pour reprendre le moteur sur le chariot 14 et le déposer sur les moyens de support 34 du poste 18.

Lorsqu'un moteur a été ainsi amené au poste 18, un palonnier 42 est fixé sur le moteur par ses bras 44 pour permettre le déplacement du moteur jusqu'au poste d'expédition 24 au moyen d'un palan.

Le palonnier est démonté du moteur lorsque celui-ci repose sur son bâti d'expédition 26 et est ramené jusqu'au poste 18 de démontage pour être fixé sur un autre moteur. Un chemin de retour des palonniers du poste 24 au poste 18 est prévu sur le bâti supérieur 30 et permet de ramener chaque palonnier directement au poste 18, le long du trajet suivi par les moteurs.

On a représenté plus en détail en figure 6 l'équipement d'un poste de l'atelier, tel par exemple que le poste 10 de montage des moyens de mesure et d'essai sur le moteur.

Ce poste 10 comprend, outre les moyens 34 de support d'un moteur, une armoire 50 de commande du réglage de la hauteur des bras de fixation sur le moteur, et deux terminaux informatiques 52 placés de part et d'autre d'un emplacement 54 dessiné au sol par des bandes de couleur et correspondant à une zone de travail sur le moteur lorsque celui-ci est porté par les bras de fixation des moyens de support 34. Des moyens d'éclairage sont encastrés dans le sol dans l'emplacement 54 et sont recouverts par des plaques de matériau transparent situées au niveau du sol et sur lesquelles peuvent marcher les opérateurs, cette disposition permettant un bon éclairage de la partie inférieure d'un moteur. D'autres moyens d'éclairage sont portés par le bâti supérieur 30, pour l'éclairage de la partie supérieure du moteur.

Chaque terminal informatique 52 est monté sur une console 56 qui porte également des moyens de rangement d'une série d'outils utilisables par l'opérateur qui travaille sur le moteur.

Un autre terminal informatique est installé dans le poste, par exemple sur l'armoire 50 comme représenté en 58 en figure 6 pour l'affichage d'informations relatives au moteur et à la localisation sur le moteur des tâches à effectuer.

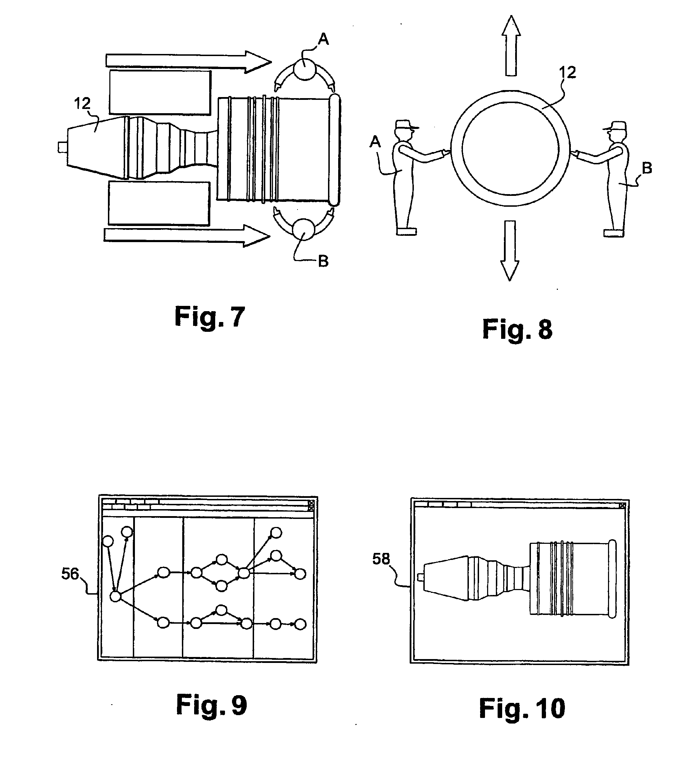

Comme on l'a représenté schématiquement aux figures 7 et 8, deux opérateurs A et B peuvent travailler simultanément sur le moteur 12 qui se trouve au poste 10, pour effectuer des tâches séquentielles identiques ou différentes dans un ordre donné, qui est affiché sur les écrans des terminaux 56 comme représenté par exemple en figure 9 et qui amène les opérateurs à se déplacer d'une extrémité à l'autre du moteur 12 dans le sens indiqué par les flèches en figure 7.

Lorsque le temps de séjour d'un moteur dans les différents postes de l'atelier est de quatre heures, comme indiqué ci-dessus, l'affichage sur l'écran 56 peut être partagé en quatre zones de couleurs différentes ayant chacune une durée d'une heure et comprenant chacune les références des opérations à effectuer sur le moteur par un opérateur dans l'ordre indiqué. En cliquant avec une souris sur le numéro d'une opération, l'opérateur peut obtenir une description détaillée de cette opération et des informations complémentaires sur cette opération.

L'autre écran 58 représenté en figure 10 affiche la forme d'un moteur dans une couleur qui correspond à celle de la zone de travail en cours sur l'écran 56 et affiche également les emplacements sur l'image du moteur des tâches à effectuer pendant cette tranche horaire. Les consoles 56 portant les terminaux 52 et les outils sont placées en des points tels que chaque opérateur peut avoir accès très rapidement, en quelques secondes, aux outils dont il a besoin. Des sièges à roulettes permettant aux opérateurs de travailler assis lorsque cela est possible, sont également prévus dans chaque poste avec d'autres équipements tels que des bacs, des poubelles, etc.

Chaque moteur est de plus équipé d'une étiquette du type RFID (radio frequency identification) dont le numéro est préalablement lié à un moteur dans la base de données centrale. Lorsqu'un moteur est mis en place dans l'un des postes, les informations concernant ce moteur (type, version, avion, compagnie aérienne cliente, etc.) sont alors transmises de façon graphique sur l'écran du poste. Ceci permet aussi d'alerter très rapidement les opérateurs d'une éventuelle réallocation d'un moteur. Lorsqu'un opérateur a terminé une opération, il le déclare sur son terminal informatique et l'opération est imputée par le système informatique au destinataire du moteur. Cela permet une traçabilité complète des opérations effectuées sur le moteur ainsi que leur imputation en comptabilité.

On peut bien entendu faire varier le nombre des opérateurs qui travaillent sur le moteur dans un poste donné, ce nombre étant typiquement compris entre 1 et 3 ou 4, en fonction des tâches à effectuer sur le moteur et du type de moteur.

Le fonctionnement de l'atelier selon l'invention découle à l'évidence de ce qui précède :
un moteur sortant d'une chaîne de montage est amené sur un chariot à côté du premier poste 10, puis il est pris sur le chariot par un palan, déplacé au-dessus des supports 34 du poste 10 et placé à la hauteur voulue pour que les bras de fixation de ces supports soient fixés sur les carters du moteur.

Le moteur peut alors être équipé des moyens voulus de mesure et d'essai. Il est ensuite soulevé à nouveau par le palan, déplacé au-dessus d'un chariot de transport qui stationne à côté du poste 10, et posé sur ce chariot pour être emmené jusqu'au local d'essai 16.

Après essai, il est ramené sur le chariot dans l'atelier sur le côté du poste 18, soulevé par un palan pour être amené au-dessus des moyens de support 34 du poste 18, puis descendu à la hauteur voulue pour que les bras de fixation des supports 34 soient fixés sur les carters du moteur. Les moyens d'essai et de mesure sont démontés du moteur, puis un palonnier 42 est descendu par un palan au-dessus du moteur et fixé à ce dernier par ses bras 44. Le palan soulève le moteur, le déplace jusqu'au poste de contrôle 20 et dépose le palonnier 42 sur les moyens de support et d'accrochage 40 des colonnes 38.

Après contrôle, le palonnier 42 portant le moteur est à nouveau soulevé par le palan et déplacé jusqu'au poste de finition 22 pour le montage des équipements définitifs du moteur, après quoi le moteur est à nouveau déplacé par le palan jusqu'au poste d'expédition 24 où il est placé sur un bâti de transport 26. Le palonnier est alors démonté du moteur et renvoyé vers le poste de démontage 18. Le moteur 12 est fixé sur le bâti de transport 26, recouvert de ses housses et bâche de protection, et peut être expédié chez son destinataire.

On voit que les différentes tâches effectuées par les opérateurs sont toujours exécutées dans le même ordre et que chaque opérateur peut à tout instant se référer à un terminal informatique pour obtenir des précisions sur les opérations à effectuer. De plus, toutes ces opérations sont cadencées dans le temps et chaque opérateur est renseigné en permanence sur son avance ou son retard par rapport au plan prévu. La traçabilité des opérations effectuées est totale, puisque les opérateurs renseignent directement le système informatique après l'exécution de chaque tâche.

## Revendications

1. Atelier de préparation de moteurs d'avion pour leur expédition, comprenant:
- un poste (10) de montage de moyens de mesure et d'essai sur chaque moteur (12), un poste (18) de démontage des moyens de mesure et d'essai, un poste (20) de contrôle des moteurs par endoscopie, un poste (22) de finition pour le montage d'équipements définitifs sur chaque moteur et un poste (24) d'expédition pour le montage de chaque moteur sur un bâti d'expédition (26) et la pose d'enveloppes de protection sur le moteur, ces postes étant agencés de façon fixe dans l'atelier le long d'un trajet prédéterminé des moteurs ;
- des moyens (30, 42) de convoyage et de manutention des moteurs, portés par un bâti (30) qui s'étend au-dessus des postes précités et comprenant des moyens de pose et de reprise des moteur sur des supports fixes (34, 38) installés dans les différents postes et conçus pour permettre un accès direct à toutes les parties du moteur, et des moyens de déplacement des moteurs (12) d'un poste à l'autre ;
- et des moyens de commande des moyens de convoyage pour que le départ d'un moteur d'un quelconque des postes précités soit suivi sensiblement sans délai de l'arrivée d'un autre moteur à ce poste, les temps de séjour des moteurs dans les différents postes étant identiques.

2. Atelier selon la revendication 1, **caractérisé en ce que** les moyens de convoyage comprennent des palans guidés en translation sur des rails horizontaux du bâti (30) précité et reliés par des câbles à des palonniers (42) fixés sur les moteurs (12) pour la pose et la reprise des moteurs.

3. Atelier selon la revendication 2, **caractérisé en ce que** les câbles des palans comportent des crochets (46) qui sont reçus dans des guides en entonnoir solidaires des palonniers et qui sont retenus dans ces guides par des moyens de verrouillage actionnés par des vérins.

4. Atelier selon l'une des revendications 1 à 3, **caractérisé en ce que** les supports de moteur installés dans les postes de montage et de démontage (10, 18) comprennent des montants verticaux (34) fixés au sol de part et d'autre de l'emplacement prévu pour le moteur, chaque montant portant un bras horizontal (36) de fixation sur un carter du moteur et des moyens de réglage de la position en hauteur de ce bras, fonctionnant en synchronisme avec les moyens de réglage des bras des autres montants (34) de sorte que tous les bras horizontaux (34) de fixation soient toujours dans un même plan horizontal.

5. Atelier selon la revendication 4, **caractérisé en ce que** chaque poste de montage et de démontage (10, 18) comprend deux montants avant (34), placés face à face au niveau du carter intermédiaire du moteur et un montant arrière (34) placé sur un côté au niveau du carter d'échappement du moteur.

6. Atelier selon la revendication 4 ou 5, **caractérisé en ce que**, au poste de montage (10), le bâti (30) comprend des rails horizontaux de déplacement d'un palan pour la prise d'un moteur (12) sur un chariot de transport (14) stationné à côté du poste (10), le déplacement du moteur pour l'amener au-dessus du poste de montage (10), la descente du moteur au niveau des bras horizontaux (36) des montants (34), puis le levage du moteur au-dessus du poste (10), son déplacement et sa pose sur un chariot (14) de transport jusqu'à un local d'essai.

7. Atelier selon l'une des revendications 4 à 6, **caractérisé en ce que**, au poste de démontage (18), le bâti (30) comprend des rails horizontaux de déplacement d'un palan pour la prise d'un moteur (12) sur un chariot de transport (14) stationné à côté du poste de démontage, le déplacement du moteur pour l'amener au-dessus des montants de support (34) de ce poste, la descente du moteur au niveau des bras horizontaux (36) des montants (34), puis le levage du moteur au-dessus du poste de démontage (18) et son déplacement jusqu'au poste de contrôle (20).

8. Atelier selon l'une des revendications précédentes, **caractérisé en ce que** les supports de moteur installés dans les postes de contrôle (20) et de finition (22) comprennent deux colonnes verticales (38) situées de part et d'autre de l'emplacement prévu pour un moteur à ce poste, et suspendues au bâti (30) précité, leurs extrémités inférieures étant au-dessus du sol à une hauteur supérieure au diamètre du moteur et comportant des moyens (40) de support et d'accrochage d'un palonnier (42) fixé à un moteur (12).

9. Atelier selon la revendication 8, **caractérisé en ce que** les moyens (40) de support et d'accrochage d'un palonnier (42) sont déplaçables en hauteur de façon synchrone sur les colonnes (38) d'un même poste.

10. Atelier selon l'une des revendications précédentes, **caractérisé en ce que** des moyens d'éclairage supérieur et inférieur sont installés à chaque poste, les moyens d'éclairage inférieur étant encastrés dans le sol et recouverts par des plaques de matériau transparent situées dans le plan du sol.

11. Atelier selon l'une des revendications précédentes, **caractérisé en ce que** chaque poste comprend au moins un terminal informatique (52) pour l'affichage de tâches séquentielles qui doivent être effectuées dans un ordre donné sur le moteur à ce poste par un opérateur, et une série d'outils que l'opérateur doit utiliser pour effecteur ces tâches.

12. Atelier selon la revendication 11, **caractérisé en ce que** chaque poste comprend au moins deux terminaux informatiques (52) et deux séries d'outils, installés de part et d'autre de l'emplacement du moteur au poste précité et destinés à être utilisés simultanément par deux opérateurs effectuant des tâches séquentielles identiques ou différentes sur le moteur.

13. Atelier selon l'une des revendications précédentes, **caractérisé en ce que** chaque poste comprend un autre terminal informatique (58) d'affichage d'informations relatives au moteur se trouvant dans ce poste et à la destination de ce moteur.

14. Atelier selon l'une des revendications 2 à 13, **caractérisé en ce qu'**il comprend un circuit de retour des palonniers (42) du poste d'expédition (24) au poste de démontage (18).

15. Atelier selon l'une des revendications précédentes, **caractérisé en ce qu'**un poste de retouche (28) est installé à côté du poste de contrôle (20) sous le bâti précité (30) et est destiné à recevoir des moteurs dont les essais n'ont pas été conformes à des normes prédéterminées.

## Claims

1. A workshop for preparing aeroengines for shipping, the workshop comprising:
- a fitting station (10) for fitting measurement and test means on each engine (12), a removal station (18) for removing the measurement and test means, an inspection station (20) for inspecting the engines by endoscopy, a finishing station (22) for fitting final pieces of equipment on each engine, and a shipping station (24) for fitting each engine on a shipping structure (26) and for placing protective coverings on the engine, these stations being arranged in fixed manner in the workshop along a predetermined path for the engines;
- conveyor and handling means (30, 42) for conveying and handling the engines, which means are carried by an overhead structure (30) extending over the above-mentioned stations and include placing-and-taking means for placing engines on and for taking engines off stationary supports (34, 38) installed in the various stations and designed to give direct access to all portions of the engine, and travel means for moving the engines (12) from one station to another; and
- control means for controlling the conveyor means so that the departure of an engine from any of the above-mentioned stations is followed substantially without delay by the arrival of another engine at that station, with the times spent by the engines in the various stations being identical.

2. A workshop according to claim 1, **characterized in that** the conveyor means comprise hoists guided in translation on horizontal rails of the above-mentioned overhead structure (30) and connected by cables to spreaders (42) fastened to the engines (12) for placing and retrieving the engines.

3. A workshop according to claim 2, **characterized in that** the cables of the hoists include hooks (46) that are received in funnel-shaped guides secured to the spreaders and that are retained in said guides by locking means actuated by actuators.

4. A workshop according to any one of claims 1 to 3, **characterized in that** the engine supports installed in the fitting and removal stations (10, 18) comprise vertical uprights (34) fastened to the floor on either side of the location provided for the engine, each upright carrying a horizontal arm (36) for fastening to a casing of the engine, together with means for adjusting the height position of the arms, which means operate synchronously with the adjustment means of the arms of the other uprights (34) such that all of the horizontal fastener arms (34) are always in a common horizontal plane.

5. A workshop according to claim 4, **characterized in that** each fitting and removal station (10, 18) includes two front uprights (34) placed in register with the intermediate casing of the engine, and one rear upright (34) placed on one side in register with the exhaust casing of the engine.

6. A workshop according to claim 4 or claim 5, **characterized in that**, at the fitting station (10), the overhead structure (30) includes horizontal rails for moving a hoist for taking an engine (12) from a transport cart (14) situated beside the station (10), for moving the engine to bring it above the fitting station (10), for lowering the engine to the level of the horizontal arms (36) of the uprights (34), and subsequently for lifting the engine above the stations (10), for moving it, and placing it on a cart (14) for transporting it to test premises.

7. A workshop according to any one of claims 4 to 6, **characterized in that**, at the removal station (18), the overhead structure (30) includes horizontal rails for moving a hoist for taking an engine (12) from a transport cart (14) located beside the removal station, for moving the engine to bring it above the support uprights (34) of the station, for lowering the engine to the level of the horizontal arms (36) of the uprights (34), and subsequently for lifting the engine above the removal station (18) and for taking it to the inspection station (20).

8. A workshop according to any preceding claim, **characterized in that** the engine supports installed in the inspection and finishing stations (20, 22) comprise a pair of vertical columns (38) situated on either side of the location provided for an engine in the station, and suspended from the above-mentioned overhead structure (30), the bottom ends thereof being above the floor at a height that is greater than the diameter of the engine, and including means (40) for supporting and attaching to a spreader (42) that is fastened to an engine (12).

9. A workshop according to claim 8, **characterized in that** the support and attachment means (40) of a spreader (42) are movable vertically in synchronized manner on the columns (38) of a given station.

10. A workshop according to any preceding claim, **characterized in that** upper and lower lighting means are installed at each station, the lower lighting means being embedded in the floor and covered by plates of transparent material lying in the plane of the floor.

11. A workshop according to any preceding claim, **characterized in that** each station includes at least one computer terminal (52) for displaying sequential tasks that are to be carried out by an operator in a given order on the engine **in that** station, and a series of tools for use by the operator in carrying out those tasks.

12. A workshop according to claim 11, **characterized in that** each station includes at least two computer terminals (52) and two sets of tools installed on either side of the location for the engine in the above-specified station and designed to be used simultaneously by two operators performing identical or different tasks sequentially on the engine.

13. A workshop according to any preceding claim, **characterized in that** each station includes another computer terminal (58) for displaying information relating to the engine that is to be found **in that** station and to the recipient of the engine.

14. A workshop according to any one of claims 2 to 13, **characterized in that** it includes a return circuit for returning spreaders (42) from the shipping station (24) to the removal station (18).

15. A workshop according to any preceding claim, **characterized in that** a reworking station (28) is installed beside the inspection station (20) under the above-mentioned overhead structure (30) and is designed to receive engines that testing has found to be out of compliance with predetermined standards.

## Patentansprüche

1. Fertigungsstraße zum Herstellen von lieferfertigen Flugzeugtriebwerken, enthaltend:
- eine Montagestation (10) zum Montieren von Mess- und Testmitteln an jedes Triebwerk (12), eine Demontagestation (18) zum Demontieren der Mess- und Testmittel, eine Prüfstation (20) zur endoskopischen Überprüfung der Triebwerke, eine Endfertigungsstation (22) zum Montieren von Endausstattungen an jedes Triebwerk und eine Abfertigungsstation (24) zum Montieren eines jeden Triebwerks an einem Abfertigungstragwerk (26) und zum Anbringen von Schutzummantelungen an das Triebwerk, wobei diese Stationen in der Fertigungsstraße entlang einer vorbestimmten Wegstrecke der Triebwerke fest angeordnet sind;
- Mittel (30, 42) zur Beförderung und Handhabung der Triebwerke, die von einem Tragwerk (30) getragen werden, das sich oberhalb der vorgenannten Stationen erstreckt, und Mittel zum Abstellen und Überführen der Triebwerke auf feste Halterungen (34, 38) aufweisen, die in den verschiedenen Stationen angeordnet und dazu ausgelegt sind, einen direkten Zugang zu sämtlichen Teilen des Triebwerks zu gestatten, sowie Mittel zum Verlagern der Triebwerke (12) von einer Station zur anderen;
- und Mittel zum Steuern der Beförderungsmittel, damit auf den Abzug eines Triebwerks aus irgendeiner der vorgenannten Stationen im wesentlichen unverzüglich das Eintreffen eines weiteren Triebwerks in dieser Station folgt, wobei die Verweildauern der Triebwerke in den verschiedenen Stationen identisch sind.

2. Fertigungsstraße nach Anspruch 1, **dadurch gekennzeichnet, dass** für das Abstellen und Überführen der Triebwerke die Beförderungsmittel Flaschenzüge aufweisen, die an horizontal verlaufenden Schienen des Tragwerks (30) verschiebbar geführt sind und über Seile mit Traversen (42) verbunden sind, die an den Triebwerken (12) befestigt sind.

3. Fertigungsstraße nach Anspruch 2, **dadurch gekennzeichnet, dass** die Seile der Flaschenzüge Haken (46) aufweisen, die in trichterartigen Führungen aufgenommen sind, welche fest mit den Traversen verbunden sind und über mittels Kraftzylinder betätigte Verriegelungsmittel in diesen Führungen gehalten werden.

4. Fertigungsstraße nach einem der Ansprüche 1 bis 3, **dadurch gekennzeichnet, dass** die in den Montage- bzw. Demontagestationen (10, 18) angeordneten Triebwerkshalterungen senkrecht verlaufende Stützen (34) aufweisen, die beiderseits der für das Triebwerk vorgesehenen Stelle am Boden befestigt sind, wobei jede Stütze einen horizontal verlaufenden Arm (36) zur Befestigung an einem Gehäuse des Triebwerks und Mittel zum Einstellen der Höhenposition dieses Arms trägt, die synchron zu Mitteln zum Einstellen der Arme der weiteren Stützen (34) arbeiten, so dass sämtliche horizontal verlaufende Befestigungsarme (34) stets in einer gleichen horizontalen Ebene liegen.

5. Fertigungsstraße nach Anspruch 4, **dadurch gekennzeichnet, dass** jede Montage- bzw. Demontagestation (10, 18) zwei vordere Stützen (34) aufweist, die im Bereich des Zwischengehäuses des Triebwerks einander gegenüberstehend angeordnet sind, sowie eine hintere Stütze (34), die auf einer Seite im Bereich des Austrittsgehäuses des Triebwerks angeordnet ist.

6. Fertigungsstraße nach Anspruch 4 oder 5, **dadurch gekennzeichnet, dass** an der Montagestation (10) das Tragwerk (30) horizontal verlaufende Schienen zum Verlagern eines Flaschenzugs für die Überführung eines Triebwerks (12) auf einen Transportschlitten (14), der neben der Station (10) steht, für die Verlagerung des Triebwerks zu dessen Mitnahme bis über der Montagestation (10), für das Absenken des Triebwerks in den Bereich der horizontal verlaufenden Arme (36) der Stützen (34) und schließlich für das Anheben des Triebwerks über der Station (10), für dessen Verlagerung und Abstellen auf einen Transportschlitten (14) zum Transport bis zu einem Testraum aufweist.

7. Fertigungsstraße nach einem der Ansprüche 4 bis 6, **dadurch gekennzeichnet, dass** an der Demontagestation (18) das Tragwerk (30) horizontal verlaufende Schienen zum Verlagern eines Flaschenzugs für die Überführung eines Triebwerks (12) auf einen Transportschlitten (14), der neben der Demontagestation steht, für die Verlagerung des Triebwerks zu dessen Mitnahme bis über den Tragstützen (34) dieser Station, für das Absenken des Triebwerks in den Bereich der horizontal verlaufenden Arme (36) der Stützen (34) und schließlich für das Anheben des Triebwerks bis über der Demontagestation (18) und dessen Verlagerung bis zur Prüfstation (20) aufweist.

8. Fertigungsstraße nach einem der vorangehenden Ansprüche, **dadurch gekennzeichnet, dass** die in der Prüf- (20) und Endfertigungsstation (22) angeordneten Triebwerkshalterungen zwei senkrecht verlaufende Säulen (38) aufweisen, die sich beiderseits der für ein Triebwerk vorgesehenen Stelle an dieser Station befinden und am vorgenannten Tragwerk (30) eingehängt sind, wobei deren untere Endabschnitte sich in einer Höhe über dem Boden befinden, die größer als der Durchmesser des Triebwerks ist, und Mittel (40) zum Haltern und Verhaken einer an einem Triebwerk (12) befestigten Traverse (42) aufweisen.

9. Fertigungsstraße nach Anspruch 8, **dadurch gekennzeichnet, dass** die Mittel (40) zum Haltern und Verhaken einer Traverse (42) an den Säulen (38) einer gleichen Station in der Höhe synchron verstellbar sind.

10. Fertigungsstraße nach einem der vorangehenden Ansprüche, **dadurch gekennzeichnet, dass** an jeder Station obere und untere Beleuchtungsmittel angeordnet sind, wobei die unteren Beleuchtungsmittel im Boden versenkt sind und von Platten aus lichtdurchlässigem Material überdeckt werden, die sich in der Ebene des Bodens befinden.

11. Fertigungsstraße nach einem der vorangehenden Ansprüche, **dadurch gekennzeichnet, dass** jede Station zumindest ein Datenverarbeitungsterminal (52) zum Anzeigen von sequentiellen Aufgaben aufweist, die in einer gegebenen Reihenfolge von einer Bedienperson am Triebwerk in dieser Station durchgeführt werden müssen, sowie einen Satz von Werkzeugen, welche die Bedienperson verwenden muss, um diese Aufgaben durchzuführen.

12. Fertigungsstraße nach Anspruch 11, **dadurch gekennzeichnet, dass** jede Station zumindest zwei Datenverarbeitungsterminals (52) und zwei Sätze von Werkzeugen aufweist, die beiderseits der Stelle des Triebwerks an der vorgenannten Station angeordnet und dazu bestimmt sind, gleichzeitig von zwei Bedienpersonen verwendet zu werden, die identische oder unterschiedliche Aufgaben am Triebwerk durchführen.

13. Fertigungsstraße nach einem der vorangehenden Ansprüche, **dadurch gekennzeichnet, dass** jede Station ein weiteres Datenverarbeitungsterminal (58) zum Anzeigen von Informationen bezüglich des in dieser Station befindlichen Triebwerks aufweist, die für dieses Triebwerk bestimmt sind.

14. Fertigungsstraße nach einem der Ansprüche 2 bis 13, **dadurch gekennzeichnet, dass** sie einen Rückführkreis zum Zurückführen der Traversen (42) von der Abfertigungsstation (24) zur Demontagestation (18) aufweist.

15. Fertigungsstraße nach einem der vorangehenden Ansprüche, **dadurch gekennzeichnet, dass** eine Überarbeitungsstation (28) neben der Prüfstation (20) unter dem vorgenannten Tragwerk (30) angeordnet und dazu bestimmt ist, Triebwerke aufzunehmen, bei denen die Tests nicht den vorbestimmten Normen entsprochen haben.
